# EUROPEAN PATENT SPECIFICATION

(11) **EP 0 607 965 B1**
(45) Date of publication and mention of the grant of the patent: **14.04.1999**
(21) Application number: 94100794.0
(22) Date of filing: 20.01.1994
(51) Int. Cl.: G06K 7/10

(54) **Bar code reader using a digital output image sensor**
Balkenkodierleser ausgestattet mit einem digitalen Ausgabe-Bildsensor
Lecteur de code à barre utilisant un détecteur d'image à sortie numérique

(30) Priority: 20.01.1993 JP 7299/93
(43) Date of publication of application: 27.07.1994
(73) Proprietor: MATSUSHITA ELECTRIC INDUSTRIAL CO., LTD., Kadoma-shi, Osaka-fu, 571 (JP)
(72) Inventor: Inoue, Katsushi, Kyoto City, 615 (JP); Tamai, Seiichiro, Toyono-gun, Osaka Prefecture 563-01 (JP); Kobayashi, Keiichi, Higashiosaka City, 579 (JP)
(74) Representative: Herrmann-Trentepohl, Werner, Dipl.-Ing.

(56) References cited:
- EP-A- 0 048 805
- EP-A- 0 287 913
- EP-A- 0 462 772
- ELEKTROTECHNISCHE ZEITSCHRIFT.E.T.Z., vol.103, no.10, May 1982, BERLIN,DEUTSCHLAND pages 510 - 513 H.D.ROTH 'OPTOELEKTRONISCHE HALBLEITER-SENSOREN'
- ELECTRONIC DESIGN, vol.39, no.24, 19 December 1991, CLEVELAND,OH,US pages 97 - 98 MILT LEONARD 'INTELLIGENT OPTOELECTRONIC SENSOR CUTS DESIGN COSTS'

## Description

### FIELD OF THE INVENTION AND RELATED ART STATEMENT

### 1. FIELD OF THE INVENTION

The present invention relates to a bar code reader which uses a digital output image sensor so as to decode a bar code symbol etc. of products or goods in a POS (point of sales) system etc.

### 2. DESCRIPTION OF THE RELATED ART

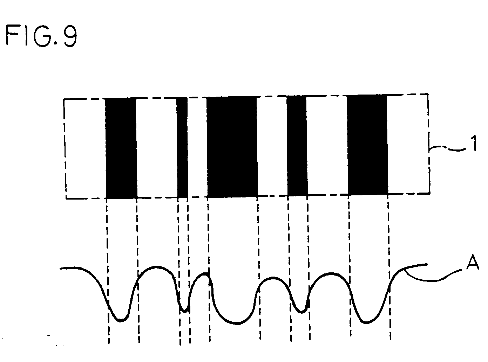

A conventional image sensor, which is used in a bar code reader for decoding a bar code symbol of goods, produces analog signal responding to quantity of light reflected from the bar code symbol. The conventional image sensor, which is operated by 12 volts d.c. supply, produces the analog signal when a pulse signal is applied to the conventional image sensor. FIG.9 shows the bar code symbol 1, and the analog output signal A of the conventional image sensor which is receiving the light reflected from the bar code symbol 1.

The conventional bar code reader had circuits of two kinds of voltage systems, that is, a 5-volt operation system and a 12-volt operation system. In the conventional bar code reader, the circuits operated by the 5-volt operation system are a microcomputer, a LED (light emitting diode) as light emitter and an operation circuit for communication to external units of POS systems through a transmission cable. And, the circuits of the 12-volt operation system are the above-mentioned image sensor and a digitizer for converting the analog signal into a two-level digital signal. Therefore, it is necessary to provide a DC-DC converter for converting operation voltage from 5 volts d.c. to 12 volts d.c., and a level converter for adjusting the circuits of the 12-volt operation system to the 5-volt operation system in the conventional bar code reader.

As mentioned above, the conventional image sensor produces an analog signal responding to the quantity of the light reflected from the bar code symbol 1 etc., and the analog signal is deciphered by using the microcomputer. However, since the microcomputer is operated by digital signal, an expensive digitizer must be provided with the conventional image sensor in the bar code reader. And further, since the conventional image sensor is operated by 12 volts d.c. supply, the DC-DC converter and the level converter must be provided in the conventional bar code reader.

In the conventional bar code reader, it is necessary to arrange spaces for receiving the digitizer, the DC-DC converter and the level converter in the conventional bar code reader. As a result, the conventional bar code reader must be formed in a large size, and becomes an expensive apparatus. The conventional bar code reader is far from design of electric power saving because the DC-DC converter does not have a conversion efficency of 100%.

And further, the conventional bar code reader can be used only in a limited place because the conventional bar code reader communicates through a transmission cable in the POS system.

The document Electronic Design, vol 39, no. 24, 19 December 1991, Cleveland, OH, US, pages 97 - 98, Milt Leonard "Intelligent Optoelectronic Sensor Cuts Design Costs" discloses a device which combines light-sensing cells with a differential amplifier, a sample-and-hold amplifier, a pixel-buffer, an output buffer etc. on the same chip of silicon. The device has cells for op amps, comparators, data converters, transmiion gates, and timing and control logic on the same piece of silicon. However, this document does not teach specifically about these circuits.

The document EP-A-0 462 772 discloses that a bar code reading apparatus comprises a decoding part (13) for decoding the bar code by reading width data related to widths of the bars and spaces of the bar code. The decoding part (13) includes a sampling part (14) for sampling the electrical signal from the light receiving part (12), a calculating part (15) for calculating an average value of the sampled data and an operation part for obtaining intersecting points where a waveform connecting the average value intersect and for reading a width of each bar and space within the bar code based on an interval between each two adjacent intersecting points . The bar code reading apparatus according to the content of the document calculates the bar width based on the average values calculated from the digital signal having multi-values produced by the sampling part 14. Therefore, the bar code reading apparatus of this document can not conduct quickly the digitizing operation.

### OBJECT AND SUMMARY OF THE INVENTION

An object of the present invention is to provide a bar code reader which uses a digital output image sensor, and which can be manufactured with low cost, in a small size, and can be operated at high conversion efficiency.

In order to achieve the above-mentioned object, a bar code reader in accordance with the present invention comprises the features according to claim 1.

While the novel features of the invention are set forth particularly in the appended claims, the invention, both as to organization and content, will be better understood and appreciated, along with other objects and features thereof, from the following detailed description taken in conjunction with the drawings.

### BRIEF DESCRIPTION OF THE DRAWINGS

FIG.1 is a front view of a digital output image sensor used in the present invention,
FIG.2 is a side view of the digital output image sensor of FIG.1,
FIG.3 shows a bar code symbol and a digital output signal which is produced from the digital output image sensor of FIG.1,
FIG.4 is a circuit diagram of a digitizer circuit for converting an analog signal into a two-level digital signal in the digital output image sensor,
FIG.5 is a plan view of a bar code reader in accordance with the present invention,
FIG.6 is a side view of the bar code reader of FIG.5,
FIG.7 is a schematic illustration showing a construction in the bar code reader of FIG.5,
FIG.8 is a block diagram of the bar code reader in accordance with the present invention, and
FIG.9 shows the bar code and the analog output signal which is produced from the conventional image sensor.

It will be recognized that some or all of the Figures are schematic representations for purposes of illustration and do not necessarily depict the actual relative sizes or locations of the elements shown.

### DESCRIPTION OF THE PREFERRED EMBODIMENTS

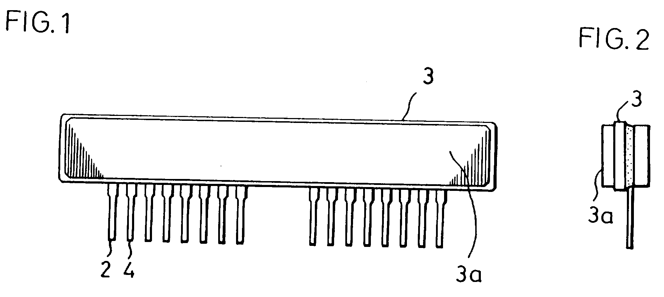

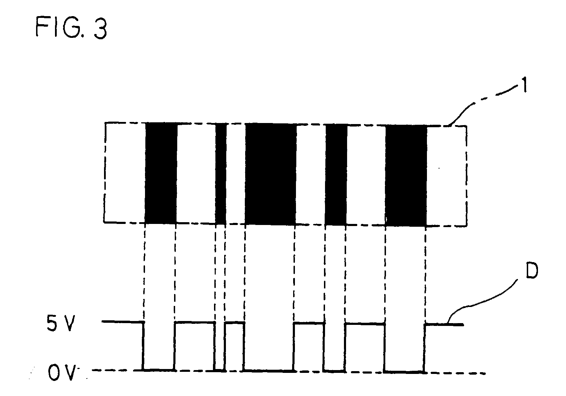

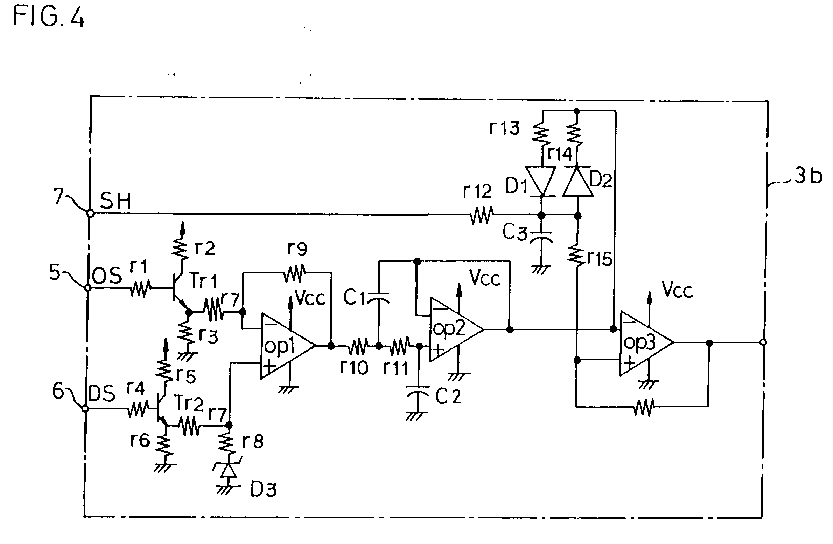

Hereafter, a preferred embodiment of a bar code reader using a digital output image sensor is elucidated with reference to the accompanying drawings of FIGs. 1 through 8. FIG.1 shows a front view of a CCD (charge coupled device) image sensor 3 as the digital output image sensor. FIG.2 is a side view showing the CCD image sensor 3 of FIG.1. FIG.3 shows a bar code symbol 1 and a digitized output signal D which is produced by the CCD image sensor 3 receiving the light reflected from the above-mentioned bar code symbol 1. FIG.4 is a circuit diagram of a digitizer circuit 3b for converting a round-edged pulse signal into a two-level digital signal in the CCD image sensor 3.

In FIGs.1 and 2, the CCD image sensor 3 has two functions of an image sensor 3a and the digitizer circuit 3b (not shown) as a digitizer. The image sensor 3a is of a linear type one having 2048 pixels. The digitizer circuit 3b converts the round-edged pulse signal from the image sensor 3a into a two-level digital signal as the digital output signal of the CCD image sensor 3. The digitizer circuit 3b is formed integrally with the image sensor 3a in one chip as shown in FIGs.1 and 2. The CCD image sensor 3 has plural terminals, such as a Vcc terminal 2 and a digital signal output terminal 4.

In FIG.3, the CCD image sensor 3 produces a digital signal D when the CCD image sensor 3 receives the light reflected from the bar code symbol 1.

FIG.4 shows a circuit as a concrete example of the digitizer circuit 3b. The digitizer circuit 3b is integrated with the image sensor 3a in one chip as the CCD image sensor 3. In FIG.4, an output signal OS from the image sensor 3a of FIG.1 is connected to a first transistor Tr1 through an input terminal 5, and a compensating output signal DS of the image sensor 3a is connected to a second transistor Tr2 through an input terminal 6. The compensating output signal DS is input to the digitizer circuit 3b for offsetting noises in the output signal OS of the image sensor 3a. The first transistor Tr1 and the second transistor Tr2 are emitter-follower circuits. The output signals of the emitter-follower circuits are applied to a first operational amplifier OP1 as a differential amplifier, and the output signal of the first operational amplifier OP1 is applied to a second operational amplifier OP2 as an active filter for removing high frequency noises of 300KHz and more.

A zener diode D3, which operates at 2.5 volts, is provided to decide an operation point of the first operational amplifier OP1. The analog output signal of the second operational amplifier OP2 is converted to a two-level digital signal by a third operational amplifier OP3, anti-parallel diodes D1 and D2, a capacitor C3 and resistors. An input terminal 7 is provided for resetting the digitizer circuit 3b in each shift pulse SH (12ms/cycle) of the image sensor 3a in order to decide an initial value of the digitizer circuit 3b. The above-mentioned elements, which constitute the digitizer circuit 3b, are activated by 5 volts as a supply voltage.

Accordingly, when the CCD image sensor 3 receives the light reflected from the bar code symbol 1, the CCD image sensor 3 having the above-mentioned digitizer circuit 3b outputs the digitized signal D as shown in FIG.3.

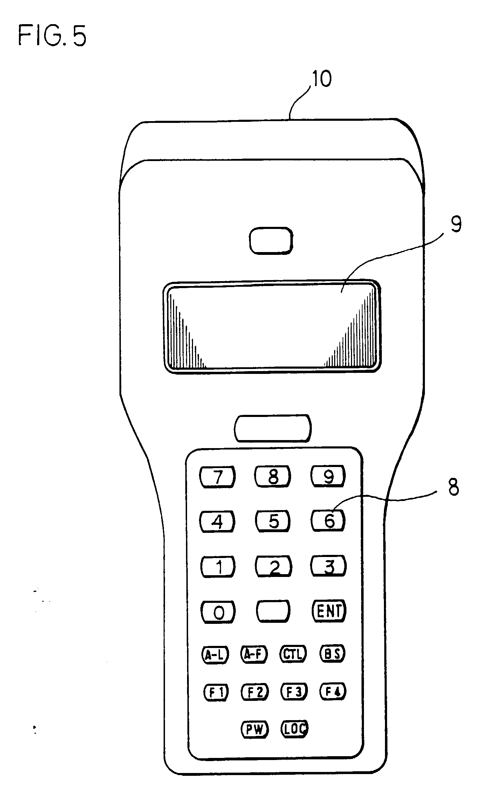

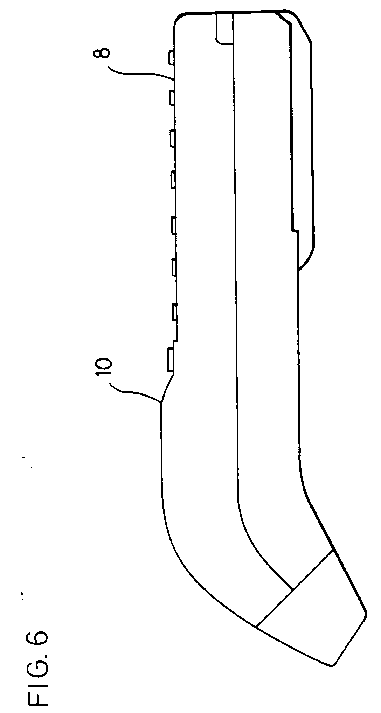

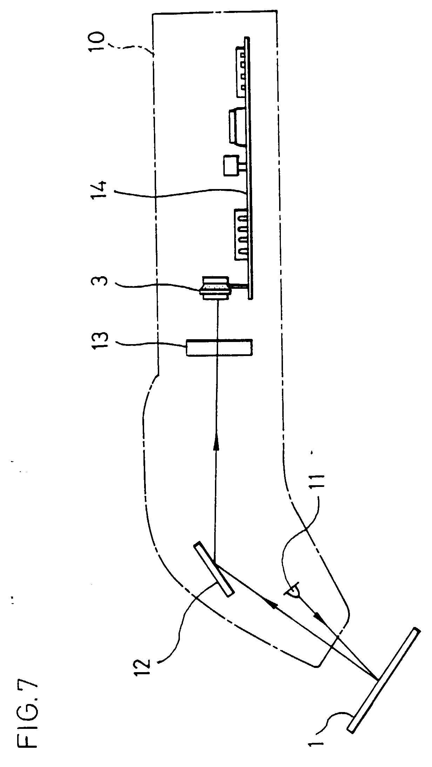

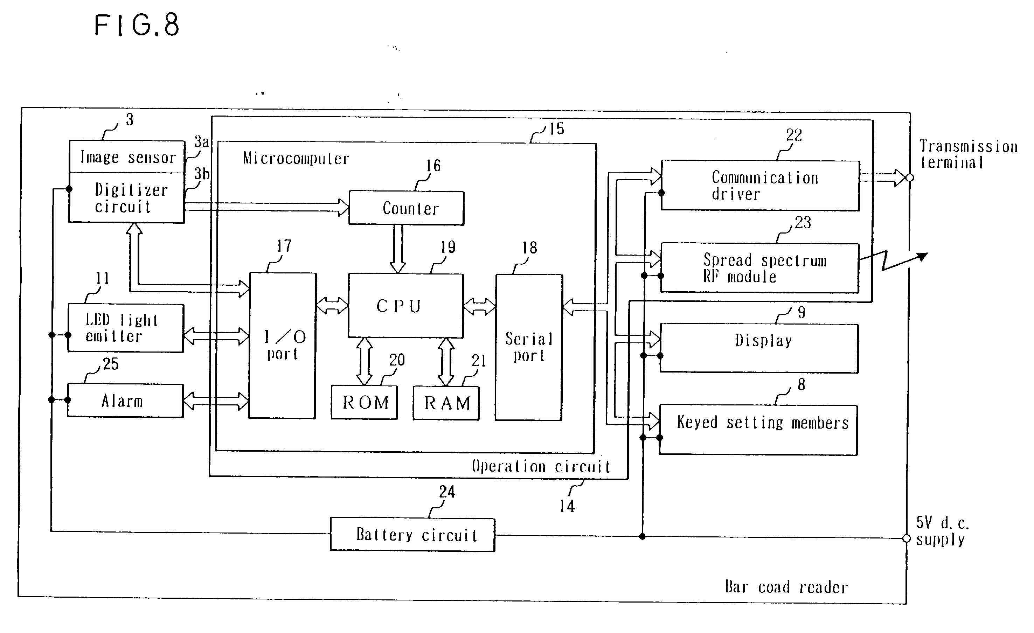

FIG.5 shows a plan view of a bar code reader 10 using the above-mentioned CCD image sensor 3. FIG.6 shows a side view of the bar code reader 10 of FIG.5. FIG.7 shows a schematic illustration of main components in the bar code reader 10. FIG.8 shows a block diagram of the bar code reader 10.

As shown in FIGs.5 and 6, the bar code reader 10 has a key board 8 as keyed setting member having plural function keys (22 pieces in this embodiment), and a display 9 for indicating information. The function keys are used for inputting various information, for example, selecting operation from menus indicated by the display 9. The display 9, which comprises LCD (liquid-crystal display), is used for confirmation of the information inputted by function keys, confirmation of the information of the bar code symbol 1, and indication of the menus for operations. The display 9 is constructed to indicate such information by 112 dots X 32 dots.

As shown in FIG.7, the bar code reader 10 comprises a LED (light emitting diode) light emitter 11 having plural LEDs in a line, reflection mirror 12, a lens 13 for creating a picture, an operation circuit 14 and the CCD image sensor 3 which comprises the image sensor 3a having 2048 pixels. When the CCD image sensor 3 is reading the bar code symbol 1, the light reflected from the bar code symbol 1 is reflected on the reflection mirror 12 and passes through the lens 13 to the CCD image sensor 3.

FIG.8 is a block diagram of the bar code reader 10. In FIG.8, the above-mentioned operation circuit 14 of the bar code reader 10 comprises a microcomputer 15, a communication driver 22 for transmitting with a wire communication, a spread spectrum RF module 23 for transmitting with a wireless communication and a battery circuit 24. The microcomputer 15 has a counter 16 for counting bars of the bar code symbol 1, I/O port 17, serial port 18, CPU 19, ROM 20 and RAM 21. The microcomputer 15 is operated to follow a program stored in the ROM 20. The information of the bar code symbol 1 deciphered by the microcomputer 15 are produced from the serial port 18, and transmitted to an external terminal unit of the POS system via the communication driver 22 for a wire communication, or the spread spectrum RF module 23 for a wireless communication.

In this embodiment, information about the bar code symbol 1 is connected to an alarm 25, such as a buzzer or a lamp through the I/O port 17. Therefore, the bar code reader 10 can inform the information, such as a finish of the reading operation, by using the alarm 25. And further, the light of the LED light emitter 11, and the operation of the CCD image sensor 3 are controlled by the microcomputer 15 through the I/O port 17.

In FIG.8, the image sensor 3a is of a linear type having 2048 as number of pixels, and the digitizer circuit 3b is operated within a range between 4.5 volts and 5.5 volts.

In case of a wire communication, the communication driver 22 is used for a serial communication through a transmission cable, such as RS 232 C. In case of a wireless communication, the spread spectrum RF module 23 and the battery circuit 24 are used instead of the communication driver 22. The spread spectrum RF module 23 communicates the information of the bar code symbol 1 to an external terminal unit of the POS system through the serial port 18. And, setting operation for the bar code reader 10 can be performed from the external terminal by using the spread spectrum RF module 23. In this embodiment, the spread spectrum RF module 23 is operated in the following specifications: the frequency band is set at a frequency from 902 MHz to 928 MHz, the output power is 100mW and the transmission rate is 242 KBPS (kilo-bit per second).

As mentioned above, the bar code reader 10 can communicate by using both of the wire communication and the wireless communication. A general radio transmission in a small power communication system is apt to be influenced by noise, and communicates at a low transmission rate, for example, 480 --- 2400 BPS (bit per second). On the contrary, the bar code reader 10 can preferably communicate in the high reliability and at high speed communications (242 KBPS) because the bar code reader 10 can use the spread spectrum RF module 23.

The battery circuit 24 is used to feed power source for the bar code reader 10 in case of the wireless transmission. The bar code reader 10 has a charging terminal for charging electric power to the battery circuit 24 from an external power source.

In the above-mentioned arrangement, the CCD image sensor 3 having 14 ×200 µm per one pixel size is generally operated at an operation voltage from 4.5 volts to 5.5 volts d.c. But the bar code reader can preferably use a CCD image sensor having a maximum voltage rating of 6 volts or less, such as about 3 volts d.c. supply. In case of the bar code reader operated by 3 volts d.c. supplied from the battery circuit, all circuits and units, such as a microcomputer etc., of the bar code reader are constituted to be operated at 3 volts. In this case, the bar code reader is very useful as a battery operation.

Apart from the above-mentioned arrangement wherein the image sensor 3a is a linear image sensor having 2048 as number of pixels, a modified arrangement may be such that an image sensor is an area image sensor (plane type) having 512 ×492 pixels.

In the above-mentioned arrangement the digitizer circuit 3b is provided as a digitizer. But apart therefrom, a modified arrangement may be such that the digitizer as an analog-to-digital converter further comprises circuits which control filter factors, an amplification degree and an offset value, and these circuits are embedded in the CCD image sensor. In this case, the bar code reader becomes the higher precision apparatus than the aforementioned arrangement. The filter factors, the amplification degree and the offset value may be controlled by an external unit of the POS system.

According to the present invention, the bar code reader can be configured in small size, for example, 25% less in size than the conventional one from our experience. And, the bar code reader having the CCD image sensor including the digitizer circuit is produced with low cost, for example, 10% down in cost than the conventional one.

And further, since the bar code reader in accordance with a preferred embodiment can communicate by using of a spread spectrum RF module 23 as a radio transmission device, the high speed communication is reliably realized, and the bar code reader is useful in a noisy area, such as in a factory etc. In such area, the bar code reader in accordance with the present invention can be used to gather various data by using the bar code system. The bar code reader can be configured in portably type, and can input and acquire data on real time.

## Claims

1. A bar code reader (10) comprising:
a light emitting means (11) for emitting light on a bar code symbol (1),
an image sensor (3a) which produces an analog signal on receiving said light reflected from said bar code symbol,
a digitizer (3b) which converts said analog signal into a digital signal, and
a decoding means (15) which deciphers said bar code symbol from said digital signal, **characterized in that**
said digital signal is a two-level digital signal,
said digitizer is integrally formed with said image sensor in one chip,
an output signal (OS) from the image sensor (3a) is connected to a first transistor (Tr1) in said digitizer,
a compensating output signal (DS) of the image sensor (3a) is connected to a second transistor (Tr2) in said digitizer (3b) for offsetting noises in said output signal (OS) of said image sensor (3a),
output signals of emitter-follower circuits, which comprise said first transistor (Tr1) and said second transistor (Tr2) are applied to a first operational amplifier (OP1) used as a differential amplifier in said digitizer, an output signal of said first operational amplifier (OP1) is applied to a second operational amplifier (OP2) used as an active filter in said digitizer for removing high frequency noise, and the output signal of said second operation amplifier (OP2) is converted to said two-level digital signal by a third operational amplifier (OP3), anti-parallel diodes (D1 and D2), a capacitor (C3) and resistors (r12, r13, r14 and r15) in said digitizer.

2. A bar code reader (10) in accordance with claim 1 wherein said image sensor (3a) is a linear image sensor operated at 6 volts d.c. supply or less.

3. A bar code reader (10) in accordance with claim 1 wherein said image sensor (3a) is an area image sensor.

4. A bar code reader (10) in accordance with claim 1 further comprises a communication means (23) for a radio transmission of a spread spectrum communication.

5. A bar code reader (10) in accordance with claim 2, further comprises a display means (9) for indicating information, and a keyboard means (8) for inputting information.

## Patentansprüche

1. Strich-Code-Leser (10), umfassend:
eine Licht emittierende Einrichtung (11) zum Emittieren von Licht auf ein Strich-Code-Symbol (1),
einen Bildsensor (3a), welcher bei Empfang des von dem Strich-Code-Symbol reflektierten Lichts ein Analogsignal erzeugt,
einen Digitalisierer (3b), welcher das Analogsignal in ein Digitalsignal umwandelt, und
eine Decodiereinrichtung (15), welche das Strich-Code-Symbol aus dem Digitalsignal entschlüsselt,
dadurch gekennzeichnet, daß das Digitalsignal ein Zwei-Pegel-Digitalsignal ist, der Digitalisierer mit dem Bildsensor in einem Chip integral ausgebildet ist, ein Ausgangssignal (OS) des Bildsensors (3a) mit einem ersten Transistor (Trl) in dem Digitalisierer verbunden ist, ein kompensierendes Ausgangssignal (DS) des Bildsensors (3a) mit einem zweiten Transistor (Tr2) in dem Digitalisierer (3b) verbunden ist, um Störungen in dem Ausgangssignal (OS) des Bildsensors (3a) zu kompensieren, Ausgangssignale von Emitter-Folger-Schaltungen, welche den ersten Transistor (Trl) und den zweiten Transistor (Tr2) umfassen, an einen in dem Digitalisierer als ein Differentialverstärker verwendeten ersten Operationsverstärker (OP1) angelegt sind, ein Ausgangssignal des ersten Operationsverstärkers (OP1) an einen in dem Digitalisierer als ein aktives Filter zum Entfernen hochfrequenter Störung verwendeten zweiten Operationsverstärker (OP2) angelegt ist und das Ausgangssignal des zweiten Operationsverstärkers (OP2) durch einen dritten Operationsverstärker (OP3), anti-parallel geschaltete Dioden (D1 und D2), einen Kondensator (C3) und Widerstände (r12, r13, r14 und r15) in dem Digitalisierer in das Zwei-Pegel-Digitalsignal umgewandelt wird.

2. Strich-Code-Leser (10) nach Anspruch 1, worin der Bildsensor (3a) ein mit 6 Volt Gleichspannungsversorgung oder weniger betriebener linearer Bildsensor ist.

3. Strich-Code-Leser (10) nach Anspruch 1, worin der Bildsensor (3a) ein Flächen-Bildsensor ist.

4. Strich-Code-Leser (10) nach Anspruch 1, ferner umfassend eine Kommunikationseinrichtung (23) für eine Radioübertragung einer Spread-Spectrum-Kommunikation.

5. Strich-Code-Leser (10) nach Anspruch 2, ferner umfassend eine Anzeigeeinrichtung (9) zur Darstellung von Information und eine Tastatureinrichtung (8) zur Eingabe von Information.

## Revendications

1. Lecteur (10) de code à barres comprenant :
un moyen (11) émetteur de lumière pour émettre de la lumière vers un symbole (1) de code à barres,
un capteur (3a) d'image qui produit un signal analogique lors de la réception de ladite lumière réfléchie par ledit symbole de code à barres,
un numériseur (3b) qui convertit ledit signal analogique en un signal numérique à deux niveaux, et
un moyen (15) de décodage qui déchiffre ledit symbole de code à barres à partir du signal numérique,
caractérisé en ce que
ledit signal numérique est un signal numérique à deux niveaux,
ledit numériseur est formé de façon intégrée avec ledit capteur d'image sur une puce,
un signal de sortie (OS) du capteur (3a) d'image est connecté à un premier transistor (Trl) dans ledit numériseur,
un signal de sortie de compensation (DS) du capteur (3a) d'image est connecté à un second transistor (Tr2) dans ledit numériseur (3b) pour compenser les bruits présents dans ledit signal de sortie (OS) dudit capteur d'image (3a),
des signaux de sortie de circuits du type émetteur-suiveur, qui comprennent ledit premier transistor (Trl) et ledit second transistor (Tr2) sont appliqués à un premier amplificateur opérationnel (OP1) utilisé en tant qu'amplificateur différentiel dans ledit numériseur, un signal de sortie dudit premier amplificateur opérationnel (OP1) est appliqué à un second amplificateur opérationnel (OP2) utilisé en tant que filtre actif dans ledit numériseur pour éliminer le bruit à haute fréquence, et le signal de sortie dudit second amplificateur opérationnel (OP2) est converti en ledit signal numérique à deux niveaux par un troisième amplificateur opérationnel (OP3), des diodes antiparallèles (D1 et D2), un condensateur (C3) et des résistances (r12, r13, r14 et r15) dans ledit numériseur.

2. Lecteur (10) de code à barres selon la revendication 1, dans lequel ledit capteur (3a) d'image est un capteur d'image linéaire fonctionnant avec une alimentation de 6 volts continus ou moins.

3. Lecteur (10) de code à barres selon la revendication 1, dans lequel ledit capteur (3a) d'image est un capteur d'image bidimensionnel.

4. Lecteur (10) de code à barres selon la revendication 1, comprenant en outre un moyen (23) de communication pour une transmission radio d'une communication à étalement de spectre.

5. Lecteur (10) de code à barres selon la revendication 2, comprenant en outre un moyen (9) d'affichage pour indiquer des informations, et un moyen (8) à clavier pour introduire des informations.
